# EUROPÄISCHE PATENTSCHRIFT

(11) **EP 0 325 917 B1**
(45) Veröffentlichungstag und Bekanntmachung des Hinweises auf die Patenterteilung: **31.03.1993**
(21) Anmeldenummer: 89100146.3
(22) Anmeldetag: 05.01.1989
(51) Int. Cl.: G01J 5/08, F02B 77/08, G08C 23/00, H04B 10/00

(54) **Vorrichtung zur Messung und Übertragung der Verbrennungsstrahlung im Brennraum von Verbrennungskraftmaschinen**
Apparatus for measuring and transmitting the combustion radiation in the combustion chamber of combustion engines
Appareil pour mesurer et transmettre la radiation de combustion dans la chambre de combustion de moteurs à combustion

(30) Priorität: 23.01.1988 DE 3801949
(43) Veröffentlichungstag der Anmeldung: 02.08.1989
(73) Patentinhaber: FEV Motorentechnik GmbH & Co. KG, D-52078 Aachen (DE)
(72) Erfinder: Pischinger, Franz, Prof. Dr., D-5100 Aachen (DE); Spicher, Ulrich, Dr.-Ing., D-5190 Stolberg (DE); Heuser, Georg, Dipl.-Ing., D-5100 Aachen (DE)
(74) Vertreter: Langmaack, Jürgen, Dipl.-Ing.

(56) Entgegenhaltungen:
- EP-A- 0 229 399
- DE-A- 3 023 471
- GB-A- 1 594 703
- SOCIETY OF AUTOMOTIVE ENGINEERS, TECHNICAL PAPER 872060: International Fuels and Lubricants Meeting and Exposition, Toronto, Ontario, 2.-5. November 1987; U. SPICHER et al.: "An experimental study of combustion and fluid flow in diesel engines"
- PATENT ABSTRACTS OF JAPAN, Band 8, Nr. 159 (P-289)[1596], 24. Juli 1984; & JP-A-59 57 137 (NIPPON KOKUYU TETSUDO) 02-04-1984
- PRODUCT ENGINEERING, Band 46, Nr. 3, März 1975, Seite 17; ANONYM: "Camera watches workings of stratified charge engine"

## Beschreibung

Die Erfindung bezieht sich auf eine Vorrichtung zur Messung und Übertragung der Verbrennungsstrahlung im Brennraum von Verbrennungskraftmaschinen, bei der die im Brennraum auftretende Verbrennungsstrahlung in dem beweglichen Teil der Verbrennungskraftmaschine durch in diesem Teil angeordnete optische Sensoren erfaßt und über Lichtleiter und eine Koppelstelle zu dem festen Teil weitergeleitet wird.

Bei Forschungs- und Entwicklungsarbeiten auf dem Gebiet der Verbrennungskraftmaschinen werden die Flammenausbreitung und die Strömungsverhältnisse im Verbrennungsraum experimentell ermittelt, um Kenntnisse über das Zusammenwirken von Flammenausbreitung, Strömungsbewegung und motorischen Einflußparametern zu erhalten. Zur Erfassung der Flammenausbreitung wird häufig die Lichtleit-Meßtechnik benutzt, während die Strömungsbewegung in den meisten Fällen mit Hilfe der Laser-Doppler-Anemometrie ermittelt wird.

Die durch optische Sonden empfangenen Lichtsignale der Flamme werden dabei durch Lichtleiter auf Photomultiplier übertragen, in digitale elektrische Signale umgewandelt und als logische Signale mit einem Rechnerprogramm ausgewertet. Als Ergebnis kann dann die räumliche Kontur der Flammenfront in Abhängigkeit von der Zeit erhalten werden. Es ist erforderlich, die Lichtemission sowohl über die Zylinderwand als auch durch Kolben und Zylinderkopf zu erfassen.

Dabei tritt das Problem, auf, zur Erfassung der Flammenausbreitung auch in dem bewegten Teil, also im Regelfall dem Kolben, optische Meßstellen anzuordnen und die Flammensignale auf den nicht-bewegten Teil der Maschine zur Weiterleitung und Auswertung zu übertragen.

Es ist aus SAE-Paper 872060 "An Experimental Study of Combustion and Fluid Flow in Diesel Engines" vom 02.11.1987 bekannt, diese Übertragung mit Hilfe eines Lichtkabels vorzunehmen, das die im Kolben erfaßten Flammensignale zu dem Kurbelgehäuse und anschließend zu den Photomultipliern weitergibt. Das Lichtkabel erstreckt sich von der Meßstelle im Kolben anschließend durch oder an der Pleuelstange und führt von dort über eine an der Pleuelstange angelenkte Koppel und eine Schwinge zum Kurbelgehäuse. Das Schwinge-Koppel-System ist so gestaltet, daß die Lichtleiter durch die Wechselbelastungen nicht überbeansprucht werden. Zu diesem Zweck werden die Lichtleiterkabel über Federbänder bzw. durch die Gelenkbolzen an den jeweiligen Gelenken vorbeigeführt. Mit Hilfe von Glasfaserstäben, die unter Wärmebehandlung entsprechend der Geometrie des Kolbens angepaßt wurden, werden die Lichtsignale vom Kolbenboden zu den flexiblen Lichtleitkabeln übertragen.

Eine solche Anordnung bietet den Vorteil einer optisch einwandfreien und relativ zuverlässigen Übertragung der Flammensignale, jedoch ist sie naturgemäß konstruktiv aufwendig und wegen der hohen Wechselbelastungen bei höheren Drehzahlen unter erhöhten Temperaturen in der Lebensdauer begrenzt. Auch ist sie für den betriebsmäßigen Einsatz im Kraftfahrzeug nicht geeignet.

Aus DE 30 23 471 A1 ist es bekannt, in einem elektrooptischen Übertrager die elektrischen Signale in Lichtsignale umzusetzen, diese Lichtsignale zwischen gegeneinander bewegbaren Teilen zu übertragen und daraufhin in einem optoelektrischen Übertrager die Lichtsignale wieder in elektrische Signale umzusetzen. Auf diese Weise können die bei Schleifringübertragern durch Reibung und Verschleiß bedingten Nachteile behoben werden. Eine solche Anordnung erlaubt jedoch nur die Übertragung bei Teilen, die sich ständig auf einer gemeinsamen Rotationsachse befinden, jedoch keine Übertragung bei Teilen, die sich translatorisch oder in anderer Weise gegeneinander bewegen.

In EP 0 229 399 A2 ist eine Einrichtung zur drahtlosen Übertragung von Signalen von einem rotierenden Körper, insbesondere von dem Spannfutter von Bohrmaschinen, beschrieben. Auch hier werden lediglich Lichtsignale der sichtbaren bzw. infraroten Strahlung erzeugt, um elektrische Signale zu übertragen. In der Anwendung auf Verbrennungskraftmaschinen können dabei - wenn überhaupt - lediglich pauschale Aussagen über Gaskräfte und Schwingungen erwartet werden. Genauere Rückschlüsse auf den Ablauf der Verbrennung und damit den eigentlichen Verbrennungsprozeß sowie die Art der Flammenausbreitung sind nicht möglich.

Der Erfindung liegt die Aufgabe zugrunde, eine Vorrichtung der eingangs bezeichneten Art zu schaffen, welche eine betriebssichere und für die Analyse des Verbrennungsprozesses geeignete Übertragung der Verbrennungsstrahlung ermöglicht, ohne daß mechanisch hochbeanspruchte Teile erforderlich sind, die insbesondere bei hohen Temperaturen und Drehzahlen dem Verschleiß unterliegen und ausfallen können. Gemäß der Erfindung wird diese Aufgabe bei einer Vorrichtung gemäß dem Oberbegriff des Anspruchs 1 dadurch gelöst, daß an dem Spalt zwischem dem beweglichen Teil und dem festen Teil in dem beweglichen Teil ein für die von den optischen Sensoren festgestellte Verbrennungsstrahlung repräsentative Signale mit seinem Querschnitt aussendender Lichtleiter angeordnet ist und daß an dem Spalt im festen Teil ein optischer Empfänger zum Empfang und zur Weiterleitung der empfangenen Signale angebracht ist, dem Lichtleiter über eine vorgegebene Strecke der Relativbewegung der beiden Teile gegenüberliegt.

Vorzugsweise ist dabei der Querschnitt des optischen Empfängers größer als der des Lichtleiters in dem beweglichen Teil, und besondere Vorteile können dadurch erreicht werden, daß das Beobachtungsfeld des optischen Empfängers derart vergrößert ist, daß das Strahlungsfeld des Lichtleiters ihm über eine vorgegebene Strecke der relativ zueinander bewegten Teile gegenüberliegt. Die Abmessung des vergrößerten Beobachtungsfeldes in Richtung der Relativbewegung der Teile kann dabei ein Mehrfaches der Abmessung senkrecht hierzu betragen.

Gemäß einer bevorzugten Anwendung der Vorrichtung ist vorgesehen, daß bei einer Kolbenbrennkraftmaschine der die Strahlung aussendende Lichtleiter in der der Zylinderlauffläche zugewandten Seite des Kolbens und der optische Empfänger in der Zylinderlauffläche angeordnet ist. Dabei kann es vorteilhaft sein, daß bei einem quer zu seiner Längsachse geteilten Kolben einer Verbrennungskraftmaschine der die festgestellte elektromagnetische Strahlung aussendende Lichtleiter in der Schnittebene zweier Teile des Kolbens angeordnet ist.

Ausführungsbeispiele der Erfindung werden nachfolgend an Hand der Zeichnungen näher beschrieben.

Fig. 1 zeigt im Schnitt einen Teil einer Kolben-Zylinderanordnung einer Verbrennungskraftmaschine, bei der die Vorrichtung gemäß der Erfindung eingebaut ist.

Figuren 2 und 3 zeigen in vergrößertem Maßstab Ausschnitte aus Fig. 1.

Fig. 4 zeigt im Schnitt einen mehrteiligen Kolben einer Verbrennungskraftmaschine, bei der der Brennraum über eine Sonde in der Kolbenmulde in Längsrichtung beobachtet wird.

Fig. 5 zeigt in Draufsicht auf den Kolbendoden eine Möglichkeit der Verteilung von Sonden über die Kolbenfläche.

Fig. 6 zeigt im Schnitt die Sensoranordnung des Kurbelgehäuses, die mit einem gemäß Fig. 4 ausgebildeten Kolben zusammenwirken kann.

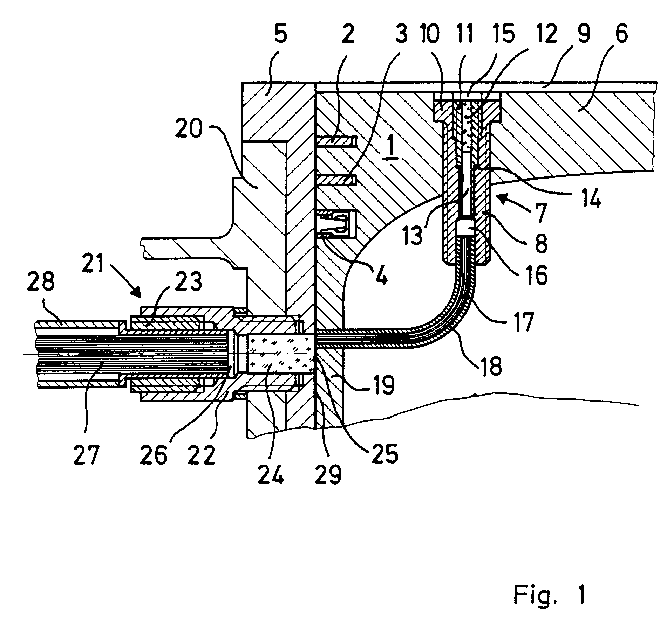

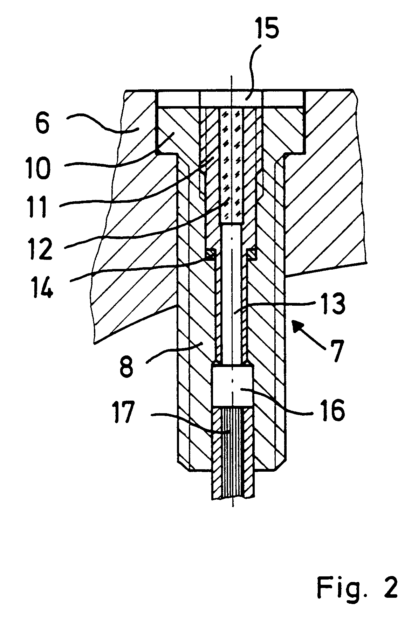

In Fig. 1 ist ein Kolben 1 mit Kolbenringen 2 und 3 und Ölabstreifring 4 einer Verbrennungskraftmaschine dargestellt, der gegenüber einem Zylinder 5 eine hin- und hergehende Bewegung ausführt. In den Boden 6 des Kolbens 1 ist eine Kolbensonde 7 (siehe auch Fig. 2) eingesetzt, die eine in den Boden 6 des Kolbens 1 eingeschraubte oder eingeklebte Hülse 8 mit auf der zum Brennraum 9 gelegenen Seite radial vorstehendem Ringflansch 10 aufweist.

In der Hülse 8, die eine Außensonde bildet, ist als Innensonde eine weitere Hülse 11 eingeschraubt oder eingeklebt, in deren Innenbohrung ein Stab 12 eingesetzt ist, der als Saphirstab oder Quarzstab ausgebildet ist und den anschließenden Innenraum 13 vor dem Eindringen von Brenngasen, Kraftstoff, Öl, Ruß u.dgl. schützt. Die Hülse 11 ist gegenüber der Hülse 8 durch eine Dich-tung 14, die vorzugsweise aus Kupfer besteht, abgedichtet.

Der Saphir- oder Quarzstab 12 hat außer der Aufgabe, den Innenraum 13 der Hülse 11 abzudichten und den Lichtleiter 17 gegenüber den mit durchschnittlich 300 Grad C verhältnismäßig hohen Temperaturen des Verbrennungsvorgangs zu schützen, die weitere Aufgabe, ein Reinigen der dem Brennraum zugewandten Fläche 15 des durch den Stab 12 gebildeten Beobachtungsfensters zu ermöglichen.

An den Innenraum 13, der leer sein oder mit optisch geeignetem Material gefüllt sein kann, z.B. Saphir oder Quarz, schließt sich Lichtleiter 17 an, der am Ende in einer Hülse 16 eingefaßt ist. Der Lichtleiter 17 ist als Bündel-Lichtleiter bekannter Art ausgebildet und mit einer Ummantelung 18 zum Schutz gegen Öl und Hitze versehen. Die Ummantelung 18 kann aus Metall oder einem hitzebeständigen Kunststoff bestehen.

Der Anfang des Lichtleiters 17 ist gegenüber dem ungefähr in der Fläche des Kolbenbodens 6 angeordneten Beobachtungsfenster mit Außenfläche 15 in einer verhältnismläßig weiten Entfernung angeordnet, um einen kleinen Beobachtungswinkel zu erhalten, der im Regelfall 6 Grad bis 8 Grad beträgt, aber auch Werte von 2 Grad bis 16 Grad haben kann.

Der Lichtleiter 17 ist mit der Ummantelung 18 in eine entsprechende Aussparung der Kolbenwandung 19 derart eingeführt, daß sein Ende im wesentlichen in der Ebene der Außenfläche des Kolbens 1 liegt. Ein besonderer Schutz durch einen Saphir- oder Quarzstab ist hier im allgemeinen nicht erforderlich, da die Temperaturen, denen die Kolbenwandung ausgesetzt ist, im Mittel bei etwa 150 Grad C liegen. Falls dies aus betrieblichen, meßtechnischen oder anderen Gründen erforderlich sein sollte, könnte jedoch der Lichtleiter 17 auch in die Kolbenwandung 19 über eine schützende Sonde eingesetzt sein, die ähnliche wie die Sonde 7 ausgebildet sein kann.

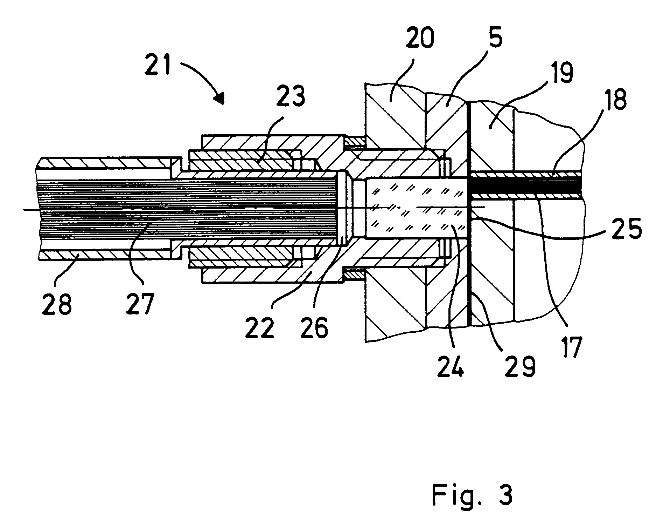

In die Wandung des Zylinders 5 ist durch eine Montageplatte 20 eine Zylinderrohrsonde 21 eingeführt (siehe dazu Fig. 3). Ähnlich wie Kolbensonde 7 enthält die Zylinderrohrsonde 21 als Außensonde eine Hülse 22 und als Innensonde eine Hülse 23. Ein in die Hülse 22 eingeklebter Saphirstab 24 ist so angeordnet, daß eine seiner Endflächen 25 in der Innenwandung des Zylinders 5 liegt, während seine andere Endfläche 26 dem Ende eines Lichtleitkabels 27 zugewandt ist. Ähnlich wie Lichtleiter 17 ist auch das Lichtleitkabel 27 mit einer schützenden Ummantelung 28 versehen. Das Lichtleitkabel 27 leitet die von Lichtleiter 17 empfangenen Informationen zur Verarbeitung weiter, beispielsweise zu einem Photomultiplier; sie werden dann in digitale elektrische Signale umgewandelt und als logische Signale mit einem Rechenprogramm ausgewertet.

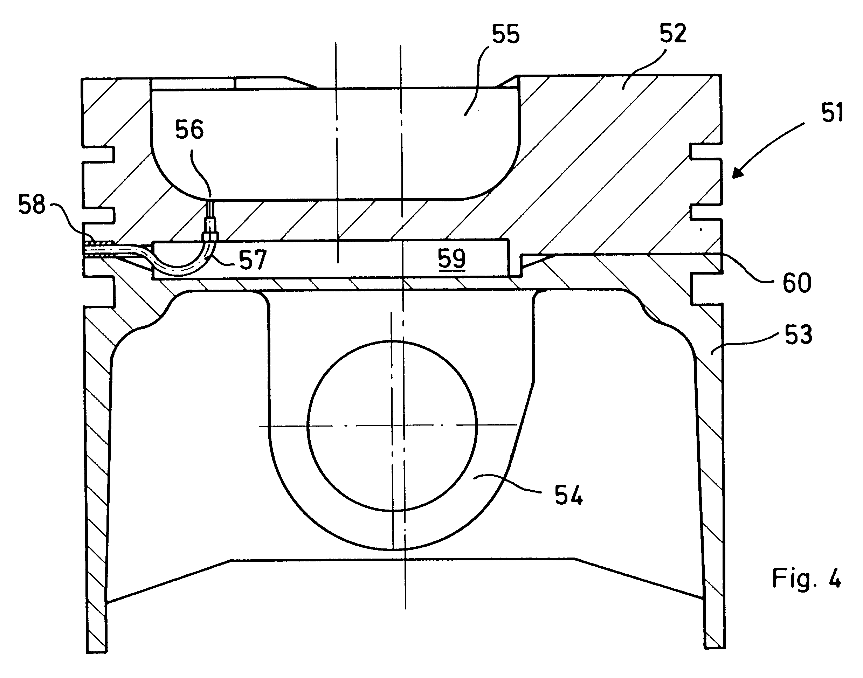

In Fig. 4 ist im Längsschnitt ein Kolben 51 dargestellt, der aus einem Bodenteil 52 und einem Schaftteil 53 mit Kolbenauge 54 zusammengesetzt ist. In Kolbenmulde 55 läuft eine Meßsonde 56 zur Beobachtung des Verbrennungsvorgangs ein. Die Meßsonde 56, die in ähnlicher Weise aufgebaut sein kann wid die Kolbensonde 7 (Figuren 1 und 2), ist über ein Lichtleitkabel 57 mit einer Gebersonde 58 verbunden, die in ähnlicher Weise aufgebaut sein kann, wie Fig. 1 im Bereich der Kolbenwandung 19 zeigt, oder auch wie die Zylinderrohrsonde 21 (Figuren 1 und 3). Dabei ist das Lichtleitkabel 57 durch den zwischen Bodenteil 52 und Schaftteil 53 vorhandenen Raum 59 geführt und anschließend in die Schnittebene 60 zwischen Bodenteil 52 und Schaftteil 53 gelegt. Ebenso befindet sich die Gebersonde 58 in der Schnittebene 60. Durch diese Bauart ergeben sich hinsichtlich des Einbaus und der Wartung der Vorrichtung erhebliche Vorteile.

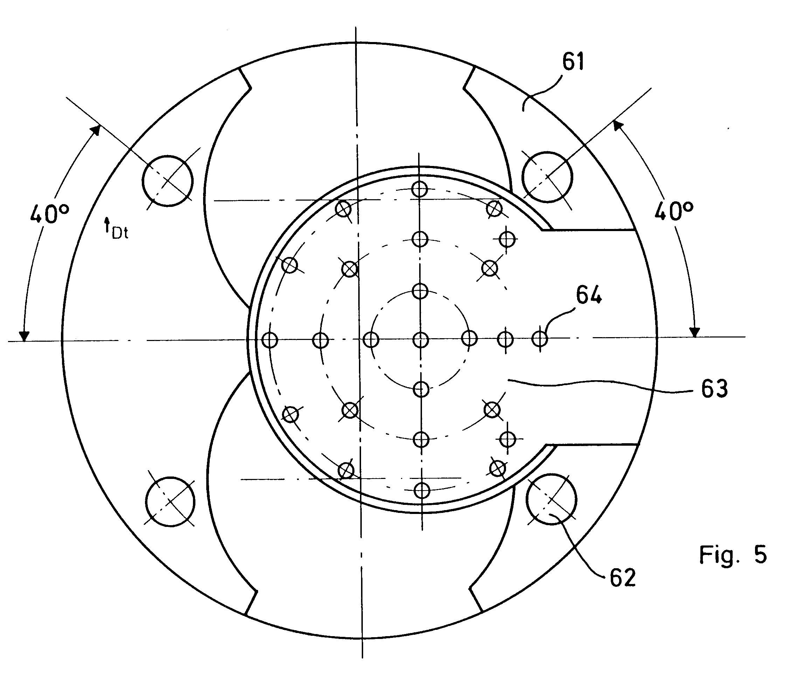

Fig. 5 zeigt eine Draufsicht auf einen Kolbenboden 61, der in ähnlicher Weise aufgebaut sein kann wie Bodenteil 52 (Fig. 4). Zur Verbindung mit dem (nicht sichtbaren) Schaftteil sind vier Bohrungen 62 für nicht dargestellte Schraubenbolzen vorhanden. Um eine hinreichend aussagekräftige Beobachtung des Verbrennungsvorgangs zu ermöglichen, sind beispielhaft über Kolbenmulde 63 insgesamt 25 Sonden 64 verteilt, deren Meßergebnisse in der beschriebenen Weise an den stationären Teil der Verbrennungskraftmaschine weitergegeben werden können.

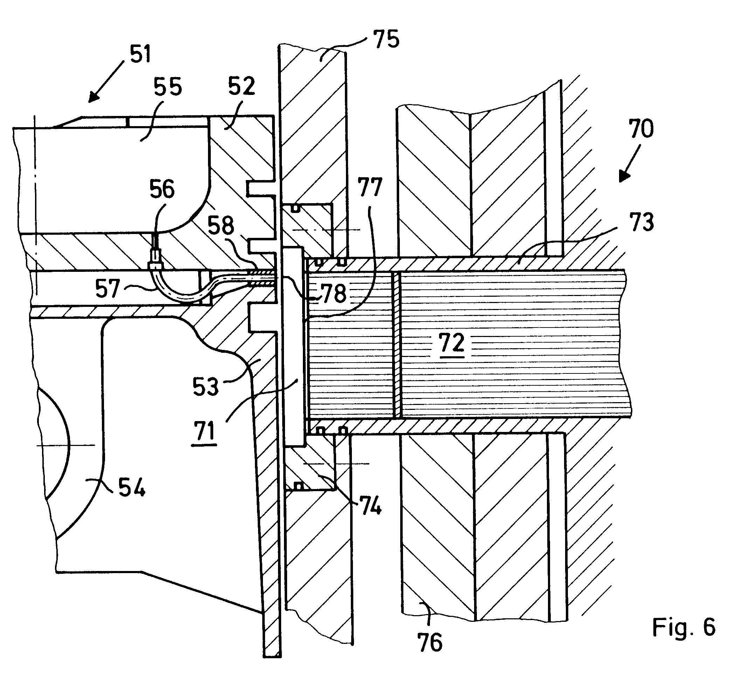

In Fig. 6 ist das Zusammenwirken einer Zylinderrohrsonde 70 mit einer Kolbensonde dargestellt, die ähnlich wie die Gebersonde 58 (Fig. 4) aufgebaut sein kann.

Der Gebersonde 58 liegt ein Stab 71 gegenüber, der ähnlich beschaffen sein kann wie der Saphirstab 24 (Figuren 1 und 3) und der seine Fortsetzung findet in einem Lichtleiterkabel 72 entsprechend dem Lichtleiterkabel 27 in den Figuren 1 und 3. Lichtleiterkabel 72 ist von einer geeigneten Ummantelung 73 umschlossen, und die beschriebene Einheit ist hindurchgeführt durch Zwischenplatte 74, Zylinderrohr 75 und Kurbelgehäuse 76.

Est ist erkennbar, daß das Beobachtungsfeld 77 der Stab-Lichtleiteranordnung 71, 72 erheblich größer ist als das Strahlungsfeld 78 der im Kolben 51 angeordneten Gebersonde 58. Durch diese Maßnahme ist eine erhebliche Vereinfachung der Gesamtanordnung bei kaum beeinträchtigter Vielfalt erreichbar. Auch können Vorteile erreicht werden, wenn umgekehrt das Strahlungsfeld der im Kolben angeordneten Gebersonde größer ist als das Beobachtungsfeld der im Zylinderrohr angeordneten Sonde. Dabei kann das Strahlungs-bzw. das Beobachtungsfeld eines der Lichtleiter derart vergrößert sein, daß das Strahlungs- bzw. das Beobachtungsfeld des anderen Lichtleiters ihm über eine vorgegebene Strecke der Relativbewegung der beiden Teile gegenüberliegt. Auch kann es vorteilhaft sein, daß die Abmessung der vergrößerten Strahlungs- bzw. Beobachtungsfläche in Richtung der Relativbewegung der beiden Teile ein Mehrfaches der Abmessung senkrecht hierzu ist und beispielsweise Rechteck- oder Ellipsenform hat.

## Patentansprüche

1. Vorrichtung zur Messung und Übertragung der Verbrennungsstrahlung im Brennraum von Verbrennungskraftmaschinen, bei der die im Brennraum auftretende Verbrennungsstrahlung in dem beweglichen Teil der Verbrennungskraftmaschine durch in diesem Teil angeordnete optische Sensoren erfaßt und über Lichtleiter und eine Koppelstelle zu dem festen Teil weitergeleitet wird, dadurch gekennzeichnet, daß an dem Spalt (29) zwischen dem beweglichen Teil (1) und dem festen Teil (5) in dem beweglichen Teil (1) ein für die von den optischen Sensoren festgestellte Verbrennungsstrahlung repräsentative Signale mit seinem Querschnitt aussendender Lichtleiter (17) angeordnet ist und daß an dem Spalt (29) im festen Teil (5) ein optischer Empfänger (21) zum Empfang und zur Weiterleitung der empfangenen Signale angebracht ist, der dem Lichtleiter (17) über eine vorgegebene Strecke der Relativbewegung der beiden Teile (1,5) gegenüberliegt.

2. Vorrichtung nach Anspruch 1, dadurch gekennzeichnet, daß der Querschnitt des optischen Empfängers (21, 72) größer als der des Lichtleiters (17, 57) in dem beweglichen Teil (1, 51) ist.

3. Vorrichtung nach Anspruch 2, dadurch gekennzeichnet, daß das Beobachtungsfeld (25, 77) des optischen Empfängers (21, 72) derart vergrößert ist, daß das Strahlungsfeld (78) des Lichtleiters (17, 57) ihm über eine vorgegebene Strecke der relativ zueinander bewegten Teile (1, 5; 75, 51) gegenüberliegt.

4. Vorrichtung nach Anspruch 3, dadurch gekennzeichnet, daß die Abmessung des vergrößerten Beobachtungsfeldes (25, 77) in Richtung der Relativbewegung der Teile (1, 5; 75, 51) ein Mehrfaches der Abmessung senkrecht hierzu ist.

5. Anwendung der Vorrichtung nach einem der Ansprüche 1-4, dadurch gekennzeichnet, daß bei einer Kolbenbrennkraftmaschine der die Strahlung aussendende Lichtleiter (17) in der der Zylinderlauffläche zugewandten Seite des Kolbens (1) und der optische Empfänger (21) in der Zylinderlauffläche angeordnet ist.

6. Anwendung nach Anspruch 5, dadurch gekennzeichnet, daß bei einem quer zu seiner Längsachse geteilten Kolben (51) einer Verbrennungskraftmaschine der die festgestellte elektromagnetische Strahlung aussendende Lichtleiter (57) in der Schnittebene zweier Teile (52, 53) des Kolbens (51) angeordnet ist.

## Claims

1. A device for measuring and transmitting the radiation due to combustion in the combustion chamber of internal combustion engines, the radiation occurring in the combustion chamber in the moving part of the engine being detected by optical sensors disposed in the aforementioned part and transmitted to the stationary part via optical conductors and a coupling place, characterised in that an optical conductor (17), the cross-section of which transmits signals representing the radiation from combustion measured by the optical sensors, is disposed in the moving part (1) alongside the gap (29) between the moving part (1) and the fixed part (5), and that an optical receiver (21) is disposed at the gap (29) in the stationary part (5) for receiving and for transmitting the received signals and is disposed opposite the optical conductor (17) over a preset distance of relative motion between the two parts (1, 5).

2. A device according to claim 1, characterized in that the cross-section of the optical receiver (21, 72) is greater than that of the optical conductor (17, 57) in the moving part (1, 51).

3. A device according to claim 2, characterized in that the field of observation (25, 77) of the optical receiver (21, 72) is increased so that the radiation field (78) of the optical conductor (17, 57) is opposite it over a preset distance through which the parts (1, 5; 75, 51) can move relatively to one another.

4. A device according to claim 3, characterised in that the length of the enlarged field of observation (25, 77) in the direction of relative motion of the parts (1, 5; 75, 51), is a number of times the length at right angles thereto.

5. Use of the device according to any one of claims 1-4, characterized in that, in the case of a piston engine, the radiation-transmitting optical conductor (17) is disposed in the side of the piston (1) facing the cylinder bore and the optical receiver (21) is disposed in the cylinder bore.

6. Use according to claim 5, characterised in that, in the case where the piston (51) of an internal combustion engine is divided at an angle to its longitudinal axis, the optical conductor (57) transmitting the measured electromagnetic radiation is disposed in the dividing plane between two parts (52, 53) of the piston (51).

## Revendications

1. Dispositif pour mesurer et transmettre le rayonnement de combustion dans la chambre de combustion de machines à combustion interne, dans lequel le rayonnement de combustion qui intervient dans la chambre de combustion est capté dans la partie mobile de la machine à combustion interne par des capteurs optiques disposés dans cette partie, et transmis. à la partie fixe par l'intermédiaire de conducteurs de lumière et d'un endroit de couplage, caractérisé par le fait qu'un conducteur de lumière (17), lequel émet par sa section transversale des signaux représentatifs du rayonnement de combustion détecté par les capteurs optiques, est disposé dans la partie mobile (1), contre l'interstice (29) entre la partie mobile (1) et la partie fixe (5), et par le fait qu'un récepteur optique (21) est monté dans la partie fixe (5) contre l'interstice (29) en vue de recevoir et de transmettre les signaux reçus, et qu'il est situé en face du conducteur de lumière (17) sur un trajet prédéterminé du déplacement relatif des deux parties (1, 5).

2. Dispositif selon la revendication 1, caractérisé par le fait que la section transversale du récepteur optique (21, 72) est plus grande que celle du conducteur de lumière (17, 57) qui est situé dans la partie mobile (1, 51).

3. Dispositif selon la revendication 2, caractérisé par le fait que le champ d'observation (25, 77) du récepteur optique (21, 72) est agrandi d'une manière telle que le champ de rayonnement (78) du conducteur de lumière (17, 57) soit situé en face de lui sur un trajet prédéterminé des parties (1, 5 ; 75, 51) qui se déplacent l'une par rapport à l'autre.

4. Dispositif selon la revendication 3, caractérisé par le fait que la dimension du champ d'observation agrandi (25, 77) dans la direction du déplacement relatif des parties (1, 5 ; 75, 51) est un multiple de sa dimension dans la direction qui est perpendiculaire à celle-ci.

5. Utilisation du dispositif selon l'une des revendications 1 à 4, caractérisée par le fait que, dans le cas d'une machine à combustion interne à piston, le conducteur de lumière (17) émettant le rayonnement est disposé dans le côté du piston (1) qui est tourné vers la surface de glissement du cylindre, et que le récepteur optique (21) est disposé dans la surface de glissement du cylindre.

6. Utilisation selon la revendication 5, caractérisée par le fait que, dans le cas où le piston (51) d'une machine à combustion interne est divisé transversalement par rapport à son axe longitudinal, le conducteur de lumière (57) qui émet le rayonnement électromagnétique détecté est disposé dans le plan qui sépare deux parties (52, 53) du piston (51).
